# EUROPEAN PATENT APPLICATION

(11) **EP 2 693 591 A1**
(43) Date of publication of application: **05.02.2014**
(21) Application number: 12185308.9
(22) Date of filing: 20.09.2012
(51) Int. Cl.: H02J 5/00, H02J 7/02, H04B 5/00

(54) **Wireless Power Transmission Device**

(30) Priority: 03.08.2012 TW 101127954
(71) Applicant: Primax Electronics Ltd, 114 Neihu, Taipei (TW)
(72) Inventor: Chen, Chih-Hung, Taiwan, ROC Taipei, (TW)
(74) Representative: Rees, Simon John Lewis

(57) **Abstract**

A wireless power transmission device includes a circuit board, heat-dissipating plate, a closed transmitter coil, and an encapsulation member. The closed transmitter coil is disposed on the circuit board. The heat-dissipating plate is disposed on the circuit board. The circuit board, the heat-dissipating plate and the closed transmitter coil are sealed by the encapsulation member. Since no gaps are formed in the encapsulation member, the foreign liquid and dust are prevented from being introduced into the encapsulation member. Moreover, since portions of the heat-dissipating plate are partially protruded outside the encapsulation member and partially exposed outside the encapsulation member, the wireless power transmission device of the present invention has enhanced heat-dissipating efficiency.

## Description

### FIELD OF THE INVENTION

The present invention relates to a power transmission device, and more particularly to a wireless power transmission device utilizing a wireless charging technology.

### BACKGROUND OF THE INVENTION

Conventionally, a variety of electronic devices should be connected with power sources to acquire an electric power in order to be normally operated. Generally, all of these electronic devices are plugged into corresponding power sources (for example power sockets) in order to acquire the electric power. With increasing development of science and technology, a variety of electronic devices are development toward small size, light weightiness and easy portability in order to comply with the users' requirements. Due to the portability of the electronic device, the electronic device fails to be connected with the power source to acquire the electric power at any time. For providing sufficient electric power to the electronic device, a built-in battery is usually installed in the electronic device. The battery is a chargeable battery.

For example, in a case that the electricity quantity of the chargeable battery of the electronic device is insufficient, the chargeable battery of the electronic device may be charged by a charging device. In this context, the charging device is also referred as a power transmission device. Generally, the conventional power transmission device has a connecting wire. After the connecting wire is plugged into the electronic device and the conventional power transmission device is connected with the power source, the electric power may be transmitted from the power transmission device to the electronic device through the connecting wire. However, the applications of the power transmission device are usually restricted by the connecting wire. For example, if the conventional power transmission device has been used to charge the electronic device for a long term, the connector of the connecting wire of the power transmission device is readily damaged because the connector of the connecting wire is frequently plugged into and removed from the electronic device. Under this circumstance, the charging efficiency of the connecting wire of the power transmission device is deteriorated. If the connector is seriously damaged, the charging operation fails to be done through the connecting wire.

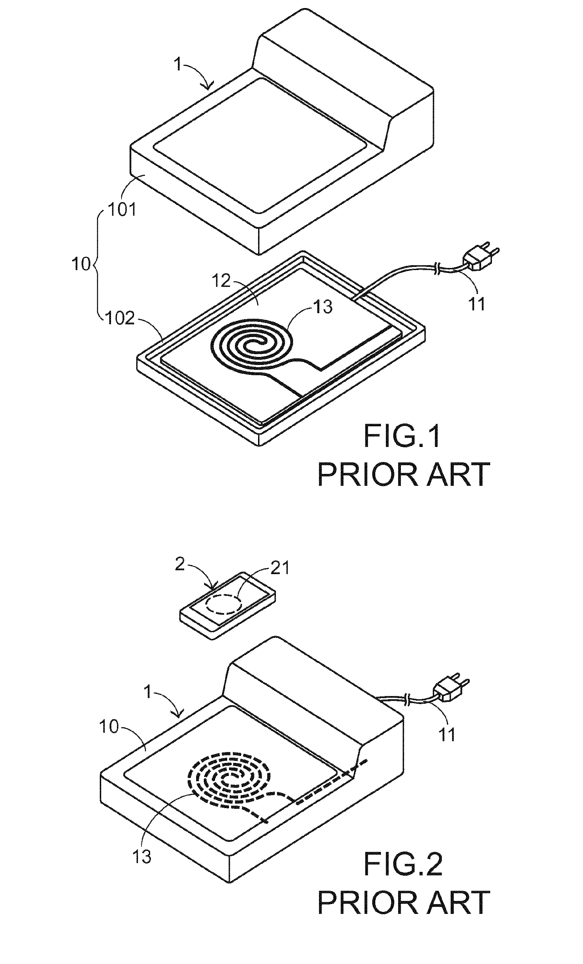

For solving the drawbacks from the wired charging technology of using the connecting wire, with increasing development of a wireless charging technology, a wireless power transmission device for wirelessly charging the electronic device has been introduced into a market. FIG. 1 is a schematic exploded view illustrating a conventional wireless power transmission device. As shown in FIG. 1, the conventional wireless power transmission device 1 comprises a casing 10, a power cable 11, a circuit board 12, and a closed transmitter coil 13. In the conventional wireless power transmission device 1, the power cable 11 is exposed outside the casing 10 in order to be connected with a power source (not shown). For example, the power source is a power socket. The circuit board 12 is disposed within the casing 10 and connected with the power cable 11. Consequently, an electric current from the power source may be transmitted to the circuit board 12 through the power cable 11. The closed transmitter coil 13 is disposed on the circuit board 12. Consequently, after the electric current from the power source is transmitted through the power cable 11 and the circuit board 12, the electric current may flow through the closed transmitter coil 13 to result in an electromagnetic effect. In response to the magnetic flux generated by the electromagnetic effect, the closed transmitter coil 13 outputs a corresponding electric power.

FIG. 2 schematically illustrates the relationship between the conventional wireless power transmission device and a conventional portable electronic device. As shown in FIG. 2, the conventional electronic device 2 comprises an electronic device casing 20, a closed receiver coil 21, and a chargeable battery (not shown). The closed receiver coil 21 of the conventional electronic device 2 is disposed within the electronic device casing 20 for receiving the electric power from the closed transmitter coil 13. The chargeable battery is connected with the closed receiver coil 21 for storing and utilizing the electric power which is received by the closed receiver coil 21.

When the electronic device casing 20 of the conventional electronic device 2 is contacted with the casing 10 of the conventional wireless power transmission device 1, if the electric power is outputted from the closed transmitter coil 13 and the closed receiver coil 21 is placed at a position near the closed transmitter coil 13 to receive the electric power, the electric power can be transmitted to the chargeable battery. Consequently, the wireless charging operation is completed. However, during the process of transmitting the electric power from the conventional wireless power transmission device 1 to the conventional electronic device 2, the closed receiver coil 21 within the conventional electronic device 2 should be purposely placed at a position near the closed transmitter coil 13 of the conventional wireless power transmission device 1. That is, for allowing the closed receiver coil 21 to receive the electric power, the transmitter coil 13 should be aligned with the closed receiver coil 21 as precisely as possible. The configurations and operating principles of the conventional wireless power transmission device 1 have been mentioned above.

Please refer to FIG. 1 again. The casing 10 of the conventional wireless power transmission device 1 is made of a plastic material. Moreover, the casing 10 comprises an upper cover 101 and a lower base 102. The upper cover 101 is placed over the lower base 102 to cover the upper cover 101. However, even if the upper cover 101 and the lower base 102 are combined together via an adhesive or any other fixing structure to enhance the adhesion therebetween, there is still a tiny gap between the upper cover 101 and the lower base 102. Under this circumstance, dust or foreign liquid is possibly introduced into the casing 10 through the tiny gap. If portions of the electronic components within the casing 10 are adversely affected by the dust or foreign liquid, the conventional wireless power transmission device 1 fails to be abnormally operated.

Therefore, there is a need of providing a wireless power transmission device with a dust-proof function and a waterproof function.

### SUMMARY OF THE INVENTION

The present invention provides a wireless power transmission device with a dust-proof function and a waterproof function.

In accordance with an aspect of the present invention, there is provided a wireless power transmission device. The wireless power transmission device is used for transmitting an electric power to a closed receiver coil of an electronic device. The wireless power transmission device includes a circuit board, a heat-dissipating plate, a closed transmitter coil, and an encapsulation member. The heat-dissipating plate is disposed on the circuit board for facilitating removing heat that is generated by the circuit board. The closed transmitter coil is disposed on the heat-dissipating plate and connected with the circuit board. In response to an electric current flowing through the circuit board, the closed transmitter coil results in an electromagnetic effect. In response to the electromagnetic effect, the closed transmitter coil outputs the electric power to the closed receiver coil. The encapsulation member is used for sealing the circuit board, the heat-dissipating plate and the closed transmitter coil. The encapsulation member has a rectangular solid profile. The heat-dissipating plate is partially exposed outside the encapsulation member.

In an embodiment, the wireless power transmission device further includes a power cable. A first end of the power cable is connected with the circuit board, and the power cable is penetrated through the encapsulation member, so that a second end of the power cable is connected with a power source. The electric current outputted from the power source is transmitted to the closed transmitter coil through the power cable.

In an embodiment, the power cable is penetrated through the encapsulation member and perpendicular to a bottom surface or a lateral surface of the encapsulation member.

In an embodiment, the encapsulation member is made of thermosetting resin.

In an embodiment, the heat-dissipating plate includes a main body and at least one protrusion part. The main body is disposed on the circuit board. The at least one protrusion part is extended from the main body and partially protruded outside the circuit board, so that a front surface of the at least one protrusion part is exposed outside a lateral surface of the encapsulation member.

In an embodiment, the main body and the at least one protrusion part are integrally formed with the heat-dissipating plate.

In an embodiment, the closed transmitter coil is disposed on the heat-dissipating plate via an adhesive, and the heat-dissipating plate is disposed on the circuit board via another adhesive.

In an embodiment, the electronic device further includes an electronic device casing and a chargeable battery. The electronic device casing is used for accommodating the closed receiver coil. When the electronic device casing is located near the encapsulation member or contacted with the encapsulation member, the electric power from the closed transmitter coil is received by the closed receiver coil within the electronic device casing. The chargeable battery is disposed within the electronic device casing and connected with the closed receiver coil, wherein the electric power received by the closed receiver coil is stored in the chargeable battery.

In an embodiment, the electronic device further includes an electronic device casing, a protective cover, and a chargeable battery. The protective cover is used for covering the electronic device casing, thereby protecting the electronic device casing. The closed receiver coil is disposed within the protective cover. When the protective cover is located near the encapsulation member or contacted with the encapsulation member, the electric power from the closed transmitter coil is received by the closed receiver coil within the protective cover. The chargeable battery is disposed within the casing and connected with the closed receiver coil through the protective cover, wherein the electric power received by the closed receiver coil is stored in the chargeable battery.

In an embodiment, the wireless power transmission device further includes a fixing mechanism for fixing the encapsulation member. The fixing mechanism includes a receiving recess for accommodating the encapsulation member. After the encapsulation member is accommodated within the receiving recess, a lateral surface of the encapsulation member is contacted with an inner surface of the receiving recess, so that the encapsulation member is fixed within the receiving recess.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic exploded view illustrating a conventional wireless power transmission device;

FIG. 2 schematically illustrates the relationship between the conventional wireless power transmission device and a conventional portable electronic device;

FIG. 3 schematically illustrates the relationship between an electronic device and a wireless power transmission device according to an embodiment of the present invention;

FIG. 4 is a schematic exploded view illustrating the wireless power transmission device according to an embodiment of the present invention;

FIGS. 5A∼5C schematically illustrate a process of assembling the wireless power transmission device according to an embodiment of the present invention;

FIG. 6 schematically illustrates an exemplary fixing mechanism of the wireless power transmission device according to the embodiment of the present invention; and

FIG. 7 schematically illustrates the relationship between an electronic device and a wireless power transmission device according to another embodiment of the present invention.

### DETAILED DESCRIPTION OF THE PREFERRED EMBODIMENT

For eliminating the drawbacks from the prior art, the present invention provides a wireless power transmission device with a dust-proof function and a waterproof function.

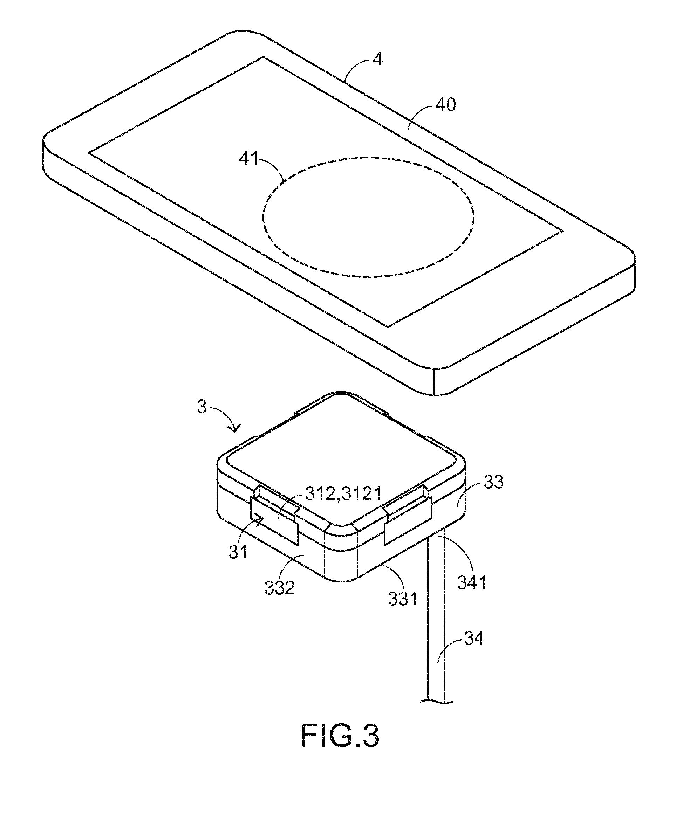

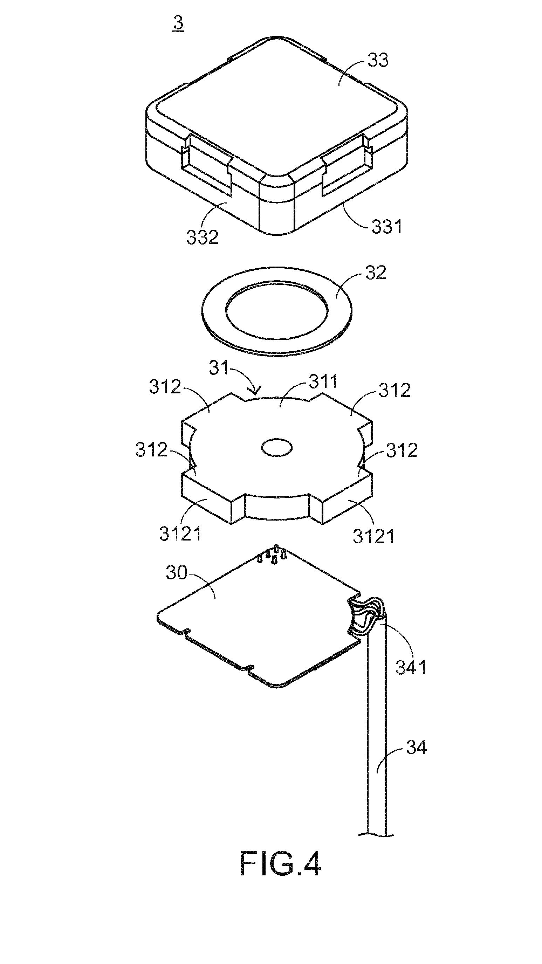

FIG. 3 schematically illustrates the relationship between an electronic device and a wireless power transmission device according to an embodiment of the present invention. FIG. 4 is a schematic exploded view illustrating the wireless power transmission device according to an embodiment of the present invention. As shown in FIGS. 3 and 4, the wireless power transmission device 3 comprises a circuit board 30, a heat-dissipating plate 31, a closed transmitter coil 32, an encapsulation member 33, and a power cable 34. The electronic device 4 comprises an electronic device casing 40, a closed receiver coil 41, and a chargeable battery (not shown). The wireless power transmission device 3 is used for transmitting electric power to the electronic device 4 in order to wirelessly charge the electronic device 4.

The configurations of the wireless power transmission device 3 will be illustrated as follows. The heat-dissipating plate 31 is disposed on the circuit board 30. In addition, the heat-dissipating plate 31 comprises a main body 311 and plural protrusion parts 312. The main body 311 of the heat-dissipating plate 31 is disposed on the circuit board 30. The plural protrusion parts 312 are extended from the main body 311 of the heat-dissipating plate 31. Moreover, the plural protrusion parts 312 are partially extended outside the circuit board 30. A first end 341 of the power cable 34 is connected with the circuit board 30. In addition, the power cable 34 is penetrated through the encapsulation member 33, and thus a second end (not shown) of the power cable 34 is connected with a power source (not shown) for receiving an electric current from the power source and transferring the electric current. As shown in FIG. 3, the power cable 34 is penetrated through the encapsulation member 33 and perpendicular to a bottom surface 331 of the encapsulation member 33. Moreover, the closed transmitter coil 32 is disposed on the heat-dissipating plate 31 and connected with the circuit board 30. In response to the electric current flowing through the circuit board 30, the closed transmitter coil 32 results in an electromagnetic effect. In response to the electromagnetic effect, the closed transmitter coil 32 outputs a corresponding electric power to the closed receiver coil 41. In this embodiment, the main body 311 and the plural protrusion parts 312 are integrated with the heat-dissipating plate 31, and the closed transmitter coil 32 is wound to have a circular profile. In addition, the electronic device 4 is a mobile phone, and the closed receiver coil 41 is also wound to have a circular profile.

In this embodiment, the circuit board 30, the heat-dissipating plate 31 and the closed transmitter coil 32 are tightly sealed by the encapsulation member 33. In addition, the encapsulation member 33 substantially has a rectangular solid profile, but the heat-dissipating plate 31 is partially exposed outside the encapsulation member 33. That is, the plural protrusion parts 312 of the heat-dissipating plate 31 are partially protruded through the encapsulation member 33. Consequently, a front surface 3121 of the plural protrusion parts 312 is exposed outside a lateral surface 332 of the encapsulation member 33 (see FIG. 3). It is preferred that the encapsulation member 33 is made of thermosetting resin. The heat-dissipating plate 31 is arranged between the closed transmitter coil 32 and the circuit board 30. Consequently, during operation of the closed transmitter coil 32, during operation of the circuit board 30 and during operation of the electronic components (not shown) of the circuit board 30, the generated heat may be absorbed by the heat-dissipating plate 31. Then, the heat is further exhausted to the surroundings of the encapsulation member 33 through the portions of the plural protrusion parts 312 that are exposed outside the encapsulation member 33.

Please refer to FIG. 3 again. The closed receiver coil 41 is accommodated within the electronic device casing 40 of the electronic device 4. When the electronic device casing 40 is located near the encapsulation member 33 or contacted with the encapsulation member 33, the electric power from the closed transmitter coil 32 is received by the closed receiver coil 41 that is disposed within the electronic device casing 40. The chargeable battery is disposed within the electronic device casing 40 and connected with the closed receiver coil 41. The chargeable battery is used for storing the electric power from the closed receiver coil 41 and providing the electric power to the electronic device 4.

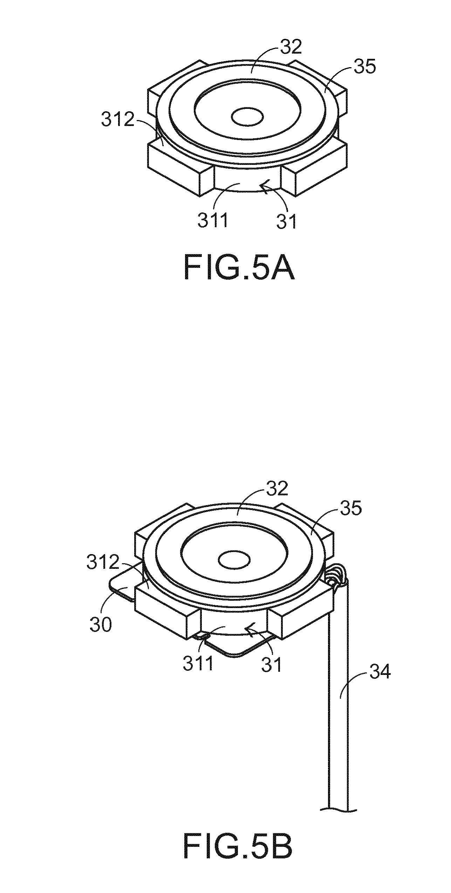

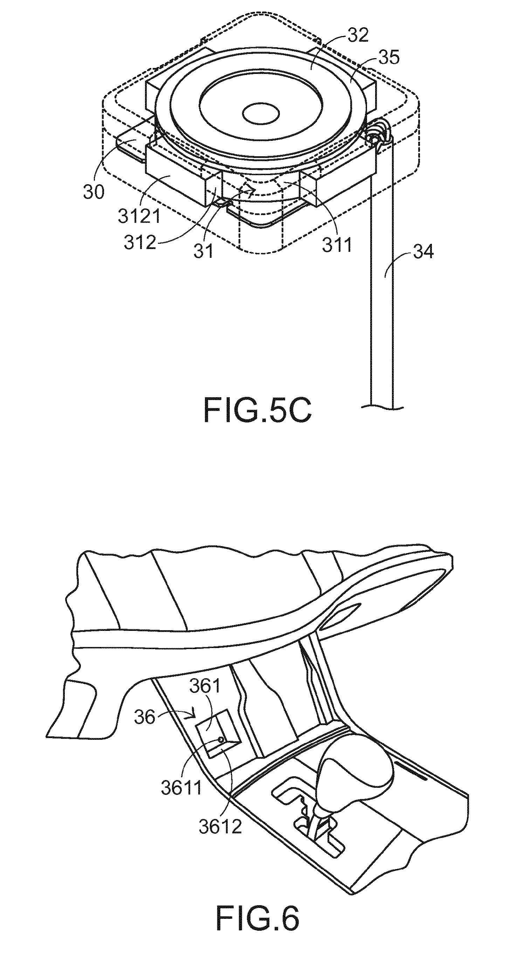

Hereinafter, a process of assembling the wireless power transmission device 3 will be illustrated with reference to FIGS. 5A∼5C. FIGS. 5A∼5C schematically illustrate a process of assembling the wireless power transmission device according to an embodiment of the present invention. Firstly, as shown in FIG. 5A, the closed transmitter coil 32 is disposed on the heat-dissipating plate 31, and the closed transmitter coil 32 is fixed on the heat-dissipating plate 31 via an adhesive 35. Then, as shown in FIG. 5, the heat-dissipating plate 31 with the closed transmitter coil 32 is disposed on the circuit board 30, and the heat-dissipating plate 31 is fixed on the circuit board 30 via another adhesive (not shown). After the heat-dissipating plate 31 and the circuit board 30 are combined together, the closed transmitter coil 32 and the circuit board 30 are connected with each other through an electric wire (not shown), so that the electrical connection between the closed transmitter coil 32 and the circuit board 30 is established. Moreover, since the closed transmitter coil 32 and the circuit board 30 are both fixed on the heat-dissipating plate 31 with stronger structural strength, the closed transmitter coil 32 and the circuit board 30 with the weaker structural strength can be effectively supported by the main body 311 of the heat-dissipating plate 31. In such way, the internal structural strength of the wireless power transmission device 3 will be enhanced.

Then, the external spaces around the closed transmitter coil 32, the heat-dissipating plate 31 and the circuit board 30 are filled with liquid thermosetting resin. The liquid thermosetting resin is softened after being heated. After the liquid thermosetting resin is cooled and solidified, the encapsulation member 33 with the rectangular solid profile is produced. By means of the structures of the plural protrusion parts 312 of the heat-dissipating plate 31, portions of the plural protrusion parts 312 are not covered by the encapsulation member 33. Under this circumstance, the front surfaces 3121 of the plural protrusion parts 312 are exposed to the lateral surface 332 of the encapsulation member 33 (see FIG. 5C). For clearly viewing the internal components, the encapsulation member 33 as shown in FIG. 5C is indicated by dotted lines.

By the way, since the filled thermosetting resin is in a liquid state, the gaps between the closed transmitter coil 32, the heat-dissipating plate 31 and the circuit board 30 may be filled with the thermosetting resin. That is, after the thermosetting resin is cooled and solidified to produce the encapsulation member 33 to tightly encapsulate the closed transmitter coil 32, the heat-dissipating plate 31 and the circuit board 30, the gaps between the closed transmitter coil 32, the heat-dissipating plate 31 and the circuit board 30 are all filled with the thermosetting resin. Under this circumstance, the foreign liquid and dust fail to be introduced into the encapsulation member 33. Consequently, the wireless power transmission device 3 has both of a dust-proof function and a waterproof function. According to the similar reasons, since the external spaces around the combination of the closed transmitter coil 32, the heat-dissipating plate 31 and the circuit board 30 are all filled with the liquid thermosetting resin, the wireless power transmission device 3 also has the anti-shock function.

In addition to the above components, the wireless power transmission device 3 further comprises a fixing mechanism 36 (see FIG. 6). FIG. 6 schematically illustrates an exemplary fixing mechanism of the wireless power transmission device according to the embodiment of the present invention. As shown in FIG. 6, the fixing mechanism 36 comprises a receiving recess 361. The receiving recess 361 is used for accommodating the encapsulation member 33. In addition, the receiving recess 361 has a hole 3611. The hole 3611 is formed in a bottom part of the receiving recess 361. After the encapsulation member 33 is accommodated within the receiving recess 361, the lateral surface 332 of the encapsulation member 33 is contacted with an inner surface 3612 of the receiving recess 361, so that the encapsulation member 33 is fixed within the receiving recess 361. At the same time, the power cable 361 of the wireless power transmission device 3 is penetrated through the hole 3611 of the receiving recess 361 in order to be connected with the power source. In this embodiment, the fixing mechanism 36 is an operating platform of a vehicle, and the receiving recess 361 is a recess of the operating platform. Alternatively, in some other embodiments, the fixing mechanism may have any other suitable structure (e.g. a fixing racket for a desk plane).

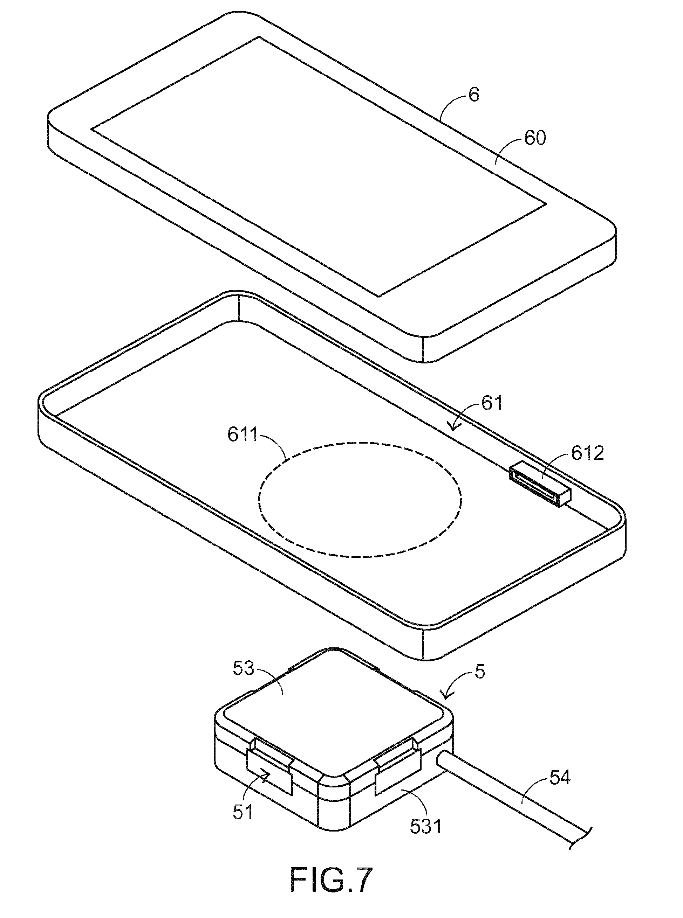

The present invention further provides a wireless power transmission device according to another embodiment of the present invention. FIG. 7 schematically illustrates the relationship between an electronic device and a wireless power transmission device according to another embodiment of the present invention. Similar to the above embodiment, the wireless power transmission device 5 of this embodiment also comprises a circuit board (not shown), a heat-dissipating plate 51, a closed transmitter coil (not shown), an encapsulation member 53, and a power cable 54. The configurations and functions of the circuit board, the heat-dissipating plate 51, the closed transmitter coil and the encapsulation member 53 are substantially identical to those of the above embodiment, and are not redundantly described herein. In comparison with the wireless power transmission device 3 of the above embodiment, the power cable 54 of the wireless power transmission device 5 of this embodiment is penetrated through the encapsulation member 53 and perpendicular to a lateral surface 531 of the encapsulation member 53 (see FIG. 7). Since the power cable 54 is penetrated through the lateral surface 531 of the encapsulation member 53, the wireless power transmission device 5 can be directly placed on a desk plane or any other suitable plane.

On the other hand, the electronic device 6 comprises an electronic device casing 60, a protective cover 61, and a chargeable battery (not shown). The protective cover 61 is used for covering the electronic device casing 60, thereby protecting the electronic device casing 60. The protective cover 61 has a closed receiver coil 611 and a transmission interface 612. The closed receiver coil 611 is disposed within the protective cover 61, but is not disposed within the electronic device casing 60. The transmission interface 612 may be connected with the electronic device casing 60. Through the transmission interface 612, the electrical connection between the protective cover 61 and the electronic device 6 is established. In other words, the closed receiver coil 611 within the protective cover 61 and the chargeable battery within the electronic device casing 60 are connected with each other through the transmission interface 612. In this embodiment, the transmission interface 612 is a universal series bus (USB). In some other embodiments, the transmission interface 612 is a mini universal series bus (Mini USB) or any other suitable interface. Moreover, the protective cover 61 is made of a soft material or a flexible material. Consequently, the transmission interface 612 may be connected with the electronic device casing 60 by bending the protective cover 61. The operations of the wireless power transmission device 5 of this embodiment are substantially identical to those of the wireless power transmission device 3 of the above embodiment, and are not redundantly described herein.

From the above two embodiments, the wireless power transmission device of the present invention utilizes the encapsulation member as the external casing thereof. Since the internal components are tightly encapsulated by the encapsulation member, the foreign liquid and dust are prevented from being introduced into the encapsulation member. Under this circumstance, the wireless power transmission device of the present invention has both of a dust-proof function and a waterproof function. In addition, the wireless power transmission device of the present invention also has an anti-shock function. On the other hand, since portions of the heat-dissipating plate are partially protruded outside the encapsulation member and partially exposed outside the encapsulation member, the wireless power transmission device of the present invention has enhanced heat-dissipating efficiency. Moreover, since the wireless power transmission device of the present invention utilizes the encapsulation member in replace of the conventional plastic casing, the material cost and the labor cost in the process of assembling the wireless power transmission device are both reduced.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A wireless power transmission device for transmitting an electric power to a closed receiver coil of an electronic device, said wireless power transmission device comprising:
a circuit board;
a heat-dissipating plate disposed on said circuit board for facilitating removing heat that is generated by said circuit board;
a closed transmitter coil disposed on said heat-dissipating plate and connected with said circuit board, wherein in response to an electric current flowing through said circuit board, said closed transmitter coil results in an electromagnetic effect, wherein in response to said the electromagnetic effect, said closed transmitter coil outputs said electric power to said closed receiver coil; and
an encapsulation member for sealing said circuit board, said heat-dissipating plate and said closed transmitter coil, wherein said encapsulation member has a rectangular solid profile, wherein said heat-dissipating plate is partially exposed outside said encapsulation member.

2. The wireless power transmission device according to claim 1, further comprising a power cable, wherein a first end of said power cable is connected with said circuit board, and said power cable is penetrated through the encapsulation member, so that a second end of said power cable is connected with a power source, wherein said electric current outputted from said power source is transmitted to said closed transmitter coil through said power cable.

3. The wireless power transmission device according to claim 2, wherein said power cable is penetrated through the encapsulation member and perpendicular to a bottom surface or a lateral surface of said encapsulation member.

4. The wireless power transmission device according to claim 1, wherein said encapsulation member is made of thermosetting resin.

5. The wireless power transmission device according to claim 1, wherein said heat-dissipating plate comprises:
a main body disposed on said circuit board; and
at least one protrusion part extended from said main body and partially protruded outside said circuit board, so that a front surface of said at least one protrusion part is exposed outside a lateral surface of said encapsulation member.

6. The wireless power transmission device according to claim 5, wherein said main body and said at least one protrusion part are integrally formed with said heat-dissipating plate.

7. The wireless power transmission device according to claim 1, wherein said closed transmitter coil is disposed on said heat-dissipating plate via an adhesive, and said heat-dissipating plate is disposed on said circuit board via another adhesive.

8. The wireless power transmission device according to claim 1, wherein said electronic device further comprises:
an electronic device casing for accommodating said closed receiver coil, wherein when said electronic device casing is located near said encapsulation member or contacted with said encapsulation member, said electric power from said closed transmitter coil is received by said closed receiver coil within said electronic device casing; and
a chargeable battery disposed within said electronic device casing and connected with said closed receiver coil, wherein said electric power received by said closed receiver coil is stored in said chargeable battery.

9. The wireless power transmission device according to claim 1, wherein said electronic device further comprises:
an electronic device casing;
a protective cover for covering said electronic device casing, thereby protecting said electronic device casing, wherein said closed receiver coil is disposed within said protective cover, wherein when said protective cover is located near said encapsulation member or contacted with said encapsulation member, said electric power from said closed transmitter coil is received by said closed receiver coil within said protective cover; and
a chargeable battery disposed within said casing and connected with said closed receiver coil through said protective cover, wherein said electric power received by said closed receiver coil is stored in said chargeable battery.

10. The wireless power transmission device according to claim 1, further comprising a fixing mechanism for fixing said encapsulation member, wherein said fixing mechanism comprises a receiving recess for accommodating said encapsulation member, wherein after said encapsulation member is accommodated within said receiving recess, a lateral surface of said encapsulation member is contacted with an inner surface of said receiving recess, so that said encapsulation member is fixed within said receiving recess.
